Europäisches Patentamt

European Patent Office

Office européen des brevets

(19)

(11) Numéro de publication: **0 013 442**

**B1**

(12) **FASCICULE DE BREVET EUROPEEN**

(45) Date de publication du fascicule du brevet: **20.01.82**

(21) Numéro de dépôt: **79105420.8**

(22) Date de dépôt: **31.12.79**

(51) Int. Cl.³: **A 23 G 9/24,** A 23 G 9/28, A 23 G 3/02, A 21 C 15/00, B 65 G 25/10

(54) Distributeur d'objets quasi-sphériques.

(30) Priorité: **16.01.79 FR 7900939**

(43) Date de publication de la demande: **23.07.80 Bulletin 80/15**

(45) Mention de la délivrance du brevet: **20.01.82 Bulletin 82/3**

(84) Etats contractants désignés: **CH DE GB IT SE**

(56) Documents cités:
FR - A - 352 809
FR - A - 980 789
FR - A - 1 408 568
US - A - 1 343 924
US - A - 3 132 847
US - A - 3 767 089

(73) Titulaire: **SOCIETE DES PRODUITS NESTLE S.A.** Case postale 353 CH-1800 Vevey (CH)

(72) Inventeur: **Launay, Noel** 15, rue Bossuet F-60000 Beauvais (FR)

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Distributeur d'objets quasi-sphériques

La présente invention concerne un distributeur d'objets sphériques ou quasi-sphériques applicable notamment à la mise en place de griottes, pralines, noisettes ou autres articles similaires servant à agrémenter le goût et l'aspect de produits alimentaires tels que des articles de pâtisseries, biscuits ou crèmes glacées et/ou à les décorer.

Parmi les dispositifs connus de distribution d'objets quasi-sphériques, les plus répandus sont des dispositifs pneumatiques ou des dispositifs mécaniques. Les premiers comportent soit des moyens pour aspirer au hasard l'un des objets quasi-sphérique dans un tas ou, au contraire, des moyens pour pulser au moyen d'air comprimé lesdits objets à partir d'alvéoles dans lesquels ils ont été préalablement placés et, dans un cas comme dans l'autre, propulser ledit objet sur le produit récepteur. Parmi les seconds, et qui sont très répandus, on trouve les dispositifs dans lesquels des aiguilles piquent les objets à placer sur le produit récepteur dans une réserve, pour, ensuite, les transférer de cette réserve jusque sur ce même produit et les y déposer.

Ces dispositifs, qu'ils soient d'un type ou de l'autre, ont en commun l'inconvénient d'une fiabilité de fonctionnement généralement faible. En outre, les dispositifs mécaniques à aiguilles peuvent présenter un réel danger pour les produits alimentaires du fait que des aiguilles ou fragments d'aiguilles peuvent se casser ou se détacher et rester incorporés au produit sans que la chose puisse être remarquée au moment où l'incident se produit, rendant la consommation du produit final particulièrement dangereuse.

Un autre dispositif doseur est décrit dans le brevet US - A - 3 132 847. Il comporte un corps cylindrique dans lequel tourne un ensemble de pales montées radialement autour d'un axe excentré par rapport à l'axe du cylindre et appliquées élastiquement contre sa paroi. Les pales râclent les parois du cylindre et poussent uniformément des fruits ou morceaux de fruits à partir d'une trémie dans une masse de crème glacée qui progresse dans le corps du doseur depuis un conduit d'amenée latéral, le traverse et sort par un autre conduit latéral. Si ce dispositif permet d'incorporer en continu et de manière uniforme les objets dans la masse de crème glacée sans les endommager, il ne permet pas la recherche d'un objet dans un tas préalablement à son éjection unitaire sur un produit alimentaire en défilement.

La présente invention obvie à ces inconvénients en fournissant un appareil de distribution et de mise en place d'objets quasi-sphériques, à la fois simple et fiable et permettant en outre d'effectuer un calibrage des objets quasi-sphériques prélevés et distribués.

Le dispositif selon l'invention comporte une trémie de réception desdits objets quasi-sphériques, pouvant coo-pérer avec un organe lui imprimant un mouvement oscillatoire, et munie d'un orifice inférieur d'évacuation des produits hors de ladite trémie. Il est caractérisé par le fait qu'il comprend un canal cylindrique de réception desdits objets placé sur le support de ladite trémie et muni d'un orifice calibré disposé immédiatement en-dessous et en regard de l'orifice d'évacuation de la trémie, lequel canal est mobile en rotation autour de son axe longitudinal entre deux positions extrêmes symétriques l'une de l'autre par rapport à une position moyenne ainsi qu'une tige cylindrique coulissant axialement suivant un mouvement alternatif à l'intérieur du canal cylindrique, l'ensemble des mouvements permettant à l'orifice calibré de balayer tout le champ du fond de la trémie, l'orifice calibré se trouvant découvert dans une position extrême de la tige cylindrique et obturé dans son autre position extrême, l'extrémité libre dépassant alors hors de l'extrémité du canal, en chassant ainsi l'objet hors du canal.

Suivant une forme de réalisation, l'organe imprimant à la trémie un mouvement oscillatoire est un organe provoquant un mouvement de rotation alternative de celle-ci entre deux positions extrêmes symétriques l'une de l'autre par rapport à une position moyenne, autour d'un axe fixe par rapport à ladite trémie et parallèle à l'axe longitudinal du canal de réception des objets.

De manière avantageuse, au mouvement de rotation alternatif de la trémie est associé un mouvement de rotation du canal cylindrique muni de l'orifice calibré de sens contraire; à cet effet ledit canal est muni d'un bras radial dont l'extrémité est articulée en pivotement au moyen d'un pivot à rotule sur l'extrémité de la tige d'un vérin dont le corps est relié solidairement à l'une des faces longitudinales de la trémie par l'intemédiaire de deux bras solidaires l'un de la trémie, l'autre du corps de vérin et articulés entre eux en pivotement au moyen d'un pivot à rotule disposé aux extrémités de ces deux bras entre la trémie et la tête du corps de vérin.

Suivant une forme de réalisation préférée, l'extrémité de la tige mobile en translation axiale à l'intérieur du canal opposée à son extrémité libre est solidaire de l'extrémité de la tige d'un vérin d'axe parallèle à celui de ladite tige et dont le corps est solidaire du support dudit canal.

Suivant une forme de réalisation avantageuse, permettant de régler le calibre de l'orifice de passage des objets quasi-sphériques dans le canal et de l'adapter au diamètre desdits objets, le canal d'évacuation est muni d'au moins un manchon déplaçable en translation axiale et/ou en rotation autour de l'axe longitudinal dudit tube de réglage de la longeur et/ou de la largeur de l'orifice calibré.

Les caractéristiques et avantages de la présente invention ressortiront mieux de la description faite ci-après, à titre d'exemple non limitatif, en regard des dessins annexés sur lesquels:

— la figure 1a représente une vue en coupe du dispositif selon l'invention par un plan vertical passant par l'axe longitudinal du tube cylindrique;

— la figure 1b représente une vue schématique en perspective et, en partie tronquée, d'un dispositif selon l'invention;

— la figure 2 représente une vue en coupe du dispositif de la figure 1a par le plan vertical II—II transversal médian de la trémie;

— la figure 3 représente une vue en coupe suivant l'axe III—III de la figure 2; et

— la figure 4 représente une vue en coupe d'un mécanisme d'entraînement en rotation de la trémie et du tube cylindrique de réception des objets contenus dans la trémie.

Sur ces dessins, les mêmes références représentent les mêmes éléments.

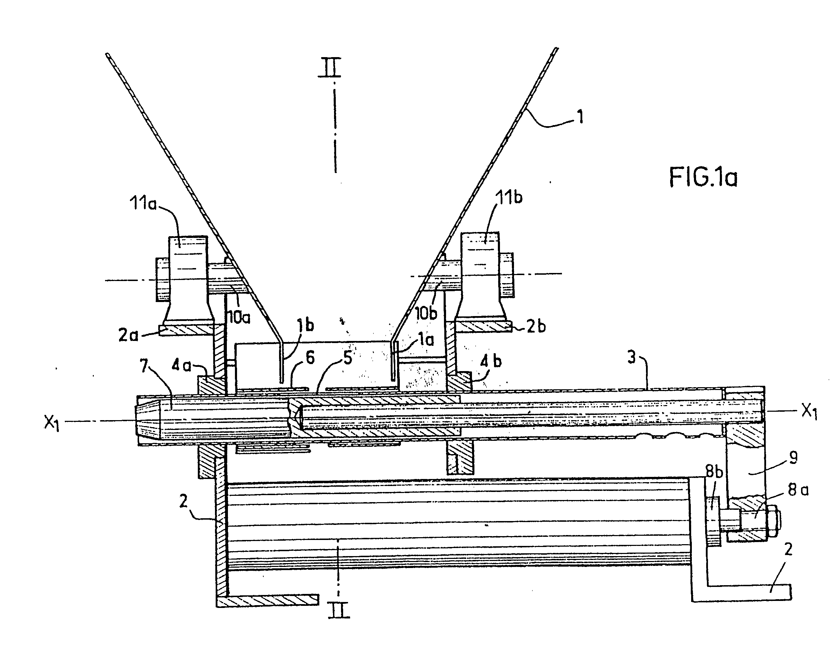

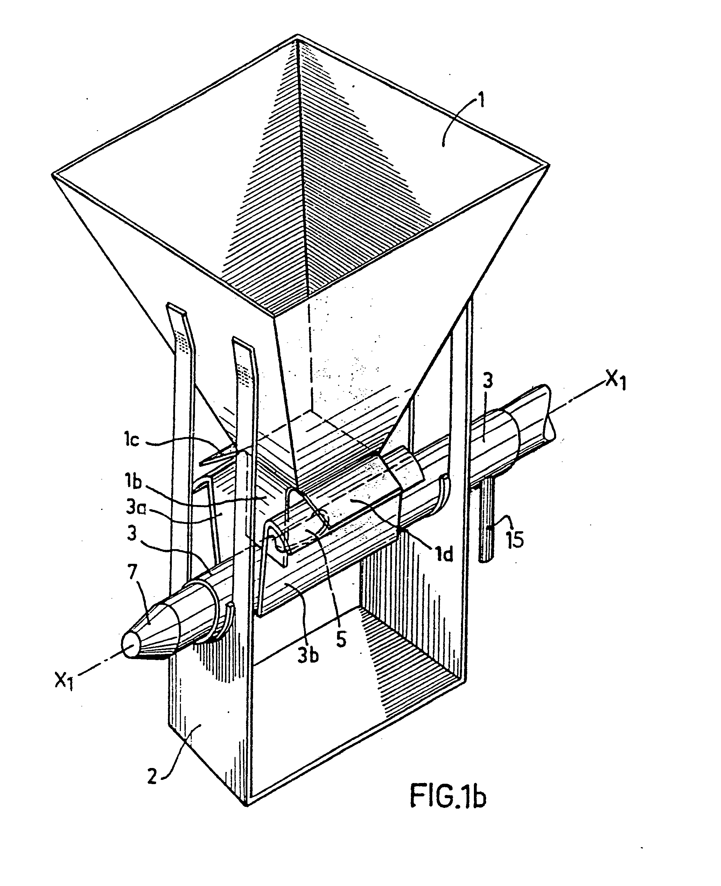

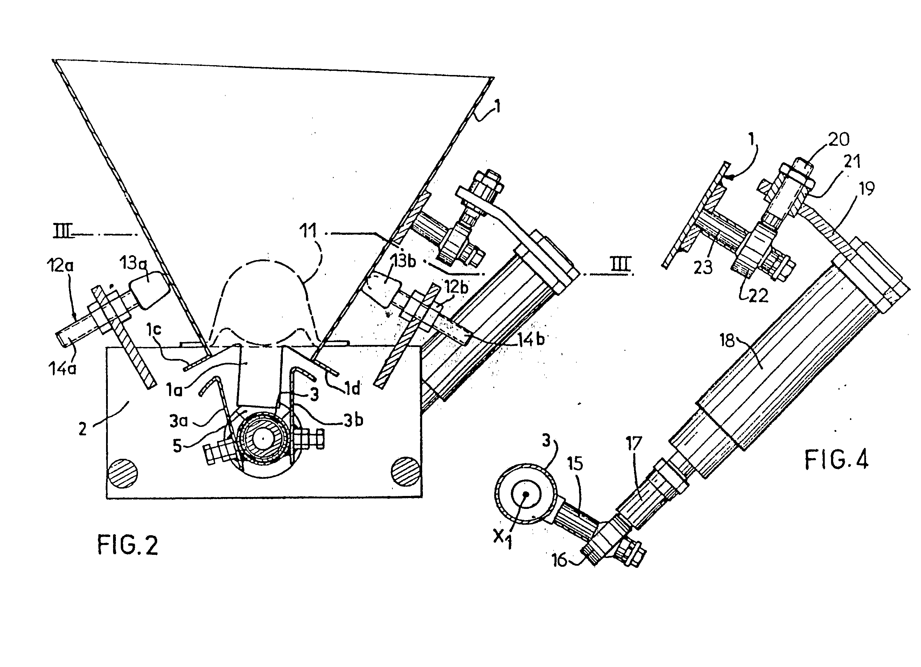

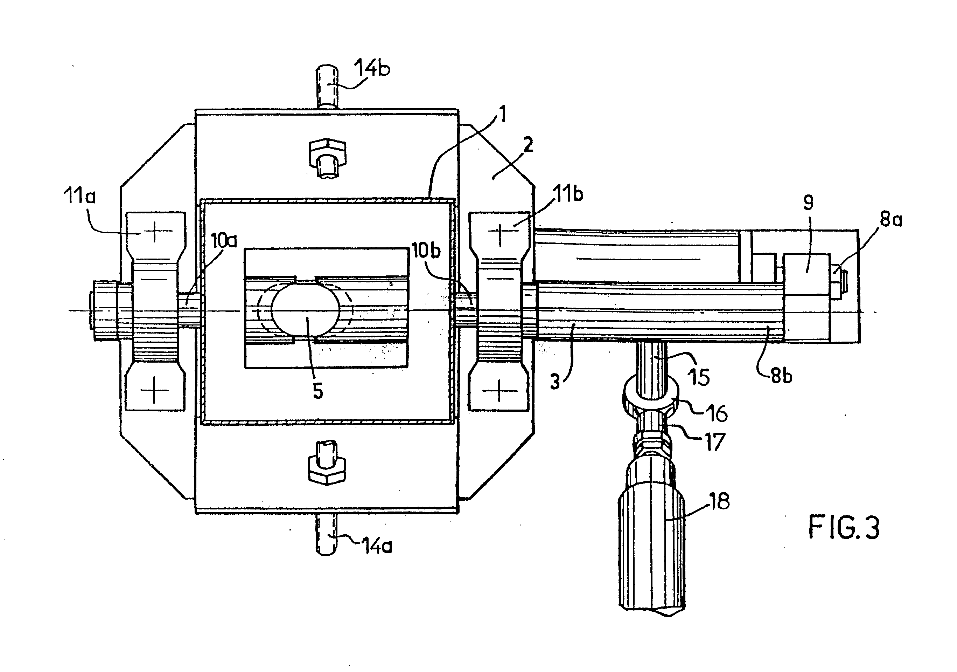

En se référant tout d'abord aux figures 1a, 1b, 2 et 3: le distributeur d'objets quasi-sphériques selon l'invention comporte une trémie 1, dont au moins le fond est en forme de tronc de pyramide à base carrée de préférence et qui est suspendue sur un bâti 2 par l'intermédiaire d'organes de suspension coopérant avec un dispositif d'entraînement de la trémie suivant un mouvement vibratoire ou oscillatoire alternatif, dont la forme de réalisation sera décrite plus loin. Sur le bâti 2 est disposé un tube ou canal cylindrique 3 d'évacuation des produits supporté par des paliers 4a et 4b, qui peut être rendu, le cas échéant, mobile en rotation autour de son axe longitudinal horizontal $X_1$—$X_1$ placé à l'aplomb d'un plan médian de symétrie non diagonal de la trémie, et entre deux positions extrêmes symétriques l'une de l'autre par rapport à un plan vertical médian.

Le canal 3 comporte à l'aplomb de l'orifice inférieur de la trémie 1, un orifice calibré 5 de forme oblongue et plus long parallèlement à l'axe longitudinal du tube que large. Ce canal est, en outre, muni dans la région de l'orifice inférieur de la trémie d'un manchon 6 qui lui est concentrique, possède un échancrure ouverte de côté de l'orifice 5, et, est mobile en translation, et peut, le cas échéant être rendu mobile, en rotation axiale de manière que l'on puisse, en le déplaçant faire varier les dimensions dudit orifice 5, aussi bien en longueur qu'en largeur, en vue de constituer ainsi un calibreur de dimensions adaptées à celles du produit contenu dans la trémie.

Par ailleurs, chacune des faces latérales de la trémie, disposées transversalement à l'axe du canal d'évacuation se prolonge dans sa partie inférieure par un pan vertical 1a (et 1b) perpendiculaire au dit axe, tandis que chacune des deux autres, qui est inclinée sur l'horizontale et est parallèle à ce même axe se prolonge vers le bas par une aile 1c (et 1d) inclinée vers le bas et débordant vers l'extérieur de la trémie. Dans sa partie comprise entre les deux pans verticaux 1a et 1b, le canal d'évacuation 3 est muni de deux ailes latérales 3a et 3b disposées symétriquement par rapport à son plan longitudinal médian passant par l'axe longitudinal de l'orifice 5, dont chacune comprend une partie plane solidarisée au dit tube, par exemple, par soudure et disposée vers le haut, c'est-à-dire du côté de la trémie et terminée par une partie recourbée extérieurement vers le bas immédiatement en dessous d'une aile inférieure 1c ou 1d de la trémie et de manière à pouvoir être sensiblement parallèle. Les ailes 3a et 3b divergent légèrement vers la trémie mais l'écartement minimum de leurs extrémités libres reste légèrement inférieur à la largeur de la trémie à sa base. Les prolongements verticaux 1a et 1b des parois de la trémie délimitent ainsi la longeur de l'orifice de ladite trémie dans le sens parallèle à l'axe du canal d'évacuation des produits, tandis que les ailes 3a et 3b associées à ce canal délimitent la largeur effective de ce même orifice.

Une tige cylindrique 7 formant poussoir, de diamètre sensiblement, mais au plus égal au diamètre intérieur du canal 3 peut coulisser à l'intérieur de ce dernier suivant un mouvement de translation axiale. A cet effect, elle est reliée à l'extrémité 8a de la tige d'un vérin 8b, par exemple un vérin à fluide sous pression, d'axe longitudinal parallèle au sien, par l'intermédiaire d'un bras de commande 9 reliant ladite extrémité à celle du support de la tige 7, ledit vérin étant supporté par la partie inférieure du bâti 2. De cette manière, on peut donner à la tige 7 un mouvement de translation axiale alternatif dans lequel son extrémité se déplace entre deux positions extrêmes, la première étant située en deçà de l'orifice inférieur de la trémie du côté de l'extrémité du canal 3 opposée à l'extrémité de la tige du vérin, et la seconde telle que ladite extrémité qui est libre se trouve par rapport à la précédente au-delà de la partie du canal 3 placée à l'aplomb de l'orifice de la trémie 1.

La trémie comme indiqué plus haut est soumise à un mouvement oscillatoire alternatif.

Dans une forme de réalisation, représentée sur les figures 1a, 2 et 3, d'une part, la trémie est soumise à un mouvement oscillatoire de rotation autour d'un axe parallèle à l'axe longitudinal du canal d'évacuation 3, tandis que, d'autre part, ce même canal est lui-même soumis conjointement avec la trémie, à un mouvement oscillatoire de rotation autour de son axe longitudinal. A cet effet, la trémie 1 repose sur le bâti 2 par l'intermédiaire d'un arbre comportant deux parties 10a et 10b coaxiales articulées en rotation chacune sur un palier 11a et 11b supporté par les parties supérieures 2a et 2b correspondantes et

*parallèles à l'axe du canal 3.*

En regard de chacune des deux autres faces de la trémie et qui sont dans des plans parallèles à l'axe du canal 3 est disposée une butée 12a (ou 12b) solidaire du bâti 2, munie à son extrémité d'un embout 13a (ou 13b), réalisé en une matière éventuellement élastique et placée à l'extrémité d'une tige 14a (ou 14b) que l'on peut rendre mobile en translation axiale pour en régler la position et l'éloignement par rapport à la paroi de la trémie en face de laquelle elle est placée, ce qui permet de régler selon les besoins l'amplitude d'oscillation en rotation de la trémie autour de son axe de rotation. Ce mouvement de rotation oscillatoire est avantageusement lié à un mouvement oscillatoire de rotation du canal 3 autour de son axe de la manière suivante. Une entretoise radiale extérieure 15 solidarisée au canal 3, est articulée par l'intermédiaire d'un pivot à rotule 16 sur la tige mobile 17 d'un vérin dont le corps 18 est lui-même solidarisé à la face longitudinale de la trémie, par l'intermédiaire du support 19 disposé à l'extrémité dudit corps et d'une tige 20 qui peut coulisser dans un manchon de guidage 21 et est articulée en pivotement par son extrémité non guidée autour d'un pivot à rotule 22 placé à l'extrémité d'une entretoise 23 solidaire de la paroi latérale de la trémie 1 placée du côté correspondant.

L'ensemble ci-dessus décrit, constitue un ensemble articulé de liaison du canal 3 à la trémie 1. Il est mobile entre deux positions extrêmes correspondant aux positions extrêmes de la tige 17 du vérin de corps 18. En outre, il est équivalent schématiquement à un quadrilatère plan articulé comprenant un côté fixe de longueur égale à celle qui sépare l'axe de rotation du canal 3 de celui de la trémie un côté d'orientation variable mais de longueur fixe et égale à celle qui sépare l'axe de rotation du canal 3 de l'axe d'articulation de la biellette radiale 15 sur l'extrémité de la tige du vérin 18, un troisième côté d'orientation variable mais de longueur fixe et égale à la distance séparant l'axe de rotation de la trémie de l'axe d'articulation du pivot à rotule 22, et enfin, un quatrième côté d'orientation et de longueur variables en fonction de l'état d'extension de la tige du vérin 18 et compris entre l'axe d'articulation de l'extrémité du corps de vérin sur l'entretoise et l'axe d'articulation de l'extrémité de la tige de vérin, tous ces différentes axes étant parallèles entre eux.

Il est alors clair que si l'on donne à la tige 17 du vérin 18 un mouvement alternatif de va-et-vient, la trémie 1 d'une part, le canal d'évacuation 3 d'autre part, seront l'un et l'autre animés de mouvements de rotation alternatifs autour de leurs axes de rotation respectifs et que chacun de ces mouvements aura à tout instant un sens différent de celui de l'autre.

En outre, les dimensions relatives respectives des différents éléments du quadrilatère équivalent au système mécanique lié au vérin et, en particulier, *les dimensions de ses côtés* fixes, ou la course de la tige du vérin qui détermine les longueurs extrêmes du côté de longueur variable, peuvent être choisies de manière que les débattements angulaires recherchés tant pour le canal 3 que pour la trémie 1 aient des valeurs prédéterminées, choisies, notamment, en fonction de la nature et des dimensions des objets quasi-sphériques emmagasinés dans la trémie.

C'est ainsi par exemple, que dans le cas où lesdits objets sont des griottes ou produits similaires, les angles de débattement sont avantageusement de l'ordre de 5° pour la trémie et de 15° pour le tube.

De cette manière, les objets placés dans la trémie se trouvent soumis en permanence à des secousses alternées qui ont pour objet d'empêcher leur blocage en particulier au niveau de l'orifice d'évacuation à la base de la trémie qui en est la partie la plus rétrécie et également d'empêcher la formation des voûtes qui pourraient, audessus dudit orifice, en bloquer l'accès. De même, la rotation alternée du canal 3 autour de son axe longitudinal facilite la pénétration à l'intérieur dudit canal à travers l'orifice calibré 5 lorsque la tige 7 est en position de retrait, libérant ainsi ledit orifice. La présence des ailes 1c et 1d recourbées vers l'extérieur le long de la partie inférieure des parois longitudinales en regard et au voisinage des parties d'extrémité recourbées des ailes 3a et 3b disposées sur la face latérale du canal 3 entre les ailes 1a et 1b prolongeant vers le bas les faces transversales de la trémie, permet de supprimer tout risque de fuite d'un des objets à l'extérieur de la trémie et du tube à orifice calibré récepteur de ces objets.

L'ensemble ci-dessus décrit coopère par tout moyen connu approprié avec un dispositif d'adduction de fluide sous pression jusqu'aux corps des vérins de mise en mouvements de rotation alternatifs de la trémie 1 et du canal 3 à orifice calibré 5 d'une part, et de translation axiale alternative de la tige cylindrique 7, et d'échappement dudit fluide. Les amplitudes, les fréquences et les vitesses angulaires des mouvements de rotations précitées peuvent être réglés en fonction de la nature et des dimensions des objets quasi-sphériques contenus dans la trémie, à des valeurs appropriées. A cet effet, il est possible d'agir, notamment, sur les longueurs des bras 15 et 23 articulés respectivement sur les joints à rotule 16 et 22, du bras 23 ou encore de la tige 17 du vérin 18. De même, les positions des butées d'extrémités des fins de course des oscillations de la trémie sont réglées en fonction des amplitudes de ces mouvements. Il est même possible de les munir de contacteurs, actionnés par la trémie elle-même lorsqu'elle vient frapper la butée correspondante, lesdits contacteurs étant des contacteurs de commande du mécanisme de renversement du sens de marche du vérin 18, qui peuvent être de tout type connu approprié. Ce renversement du sens de rotation de la trémie et du tube à orifice calibré peut, bien entendu, être obtenu par tout autre moyen connu approprié, les contacteurs correspondant pouvant, par exemple, être disposés de manière que leur écartement soit réglable et qu'ils puissant être mis en contact avec un organe approprié lié à la tige du vérin et se déplaçant avec lui. La tige du vérin d'entraînement en translation axiale alternative de la tige 7 de poussée des corps quasi-sphériques est de même liée à un contact qui en est solidaire et qui vient attaquer en fin de course un contacteur de renversement du sens de marche, les deux contacteurs correspondants pouvant, de manière connue, être écartés l'un de l'autre d'une longueur de valeur prédéterminée, correspondant à l'amplitude que l'on souhaite donner à ladite tige. De même, la fréquence des oscillations de la tige 7, peut être réglée à toute valeur préalablement choisie en fonction du nombre de corps quasi-sphériques à évacuer hors du canal 3 dans l'unité de temps, au moyen de tout dispositif approprié connu, consistant, par exemple, à faire varier la pression d'admission et/ou d'échappement du fluide sous pression d'alimentation du vérin de commande du mouvement de cette tige.

Les mouvements des deux vérins associés à l'appareil ci-dessus décrits peuvent, bien entendu être indépendants l'un de l'autre, mais compte tenu du fait que le canal 3 de réeption et d'évacuation des produits quasi-sphériques destinés à être évacués à l'extérieur par la tige 7 ne peut recevoir lesdits produits que s'ils peuvent facilement passer à travers l'orifice calibré et que les mouvements de rotation alternatifs de la trémie et du tube sont destinés à faciliter ce passage, il est clair qu'il est avantageux de synchroniser l'ensemble de ces mouvements par tout moyen connu approprié.

Lorsque ces différents mouvements sont convenablement synchronisés, l'agitation par oscillations alternatives auxquelles sont soumis les produits quasi-sphériques contenus dans la trémie, empêche la production de phénomènes de voûtage dans la masse desdits produits. Les dimensions de l'orifice calibré du canal 3 sont adaptées au diamètre des produits et de telle manière qu'elles permettent l'accès au tube d'un seul objet quasi-sphérique à la fois se situant dans une plage de dimension de valeur prédéterminée.

Le canal 3 en dessous de la trémie d'alimentation est, de son côté, soumis à un mouvement alternatif de rotation et parcourt un chemin tel que l'orifice calibré se trouve obligatoirement, au cours d'un cycle, en présence d'un objet, qui dès lors peut, à travers ledit orifice, tomber à l'intérieur du tube, d'où il est éjecté par la tige 7.

L'extrémité libre du canal 3 est disposée en regard du produit alimentaire, généralement pâtisserie, biscuiterie, confiserie ou crème glacée, à orner et/ou à agrémenter au moyen des objets quasi-sphériques distribués par l'appareil objet de l'invention. Les produits alimentaires peuvent défiler soit en translation, soit en rotation de vitesses linéaires ou angulaires uniformes, de manière que de place en place régulièrement espacées linéairement ou angulairement, un objet quasi-sphérique puisse y être posé et fixé par adhérence naturelle. La cadence régulière d'éjection des objets quasi-sphériques par la tige 7 peut aisément être coordonnée avec la vitesse uniforme de défilement du produit récepteur de manière à espacer et disposer de toute manière choisie à volonté les premiers sur le second.

L'appareil ainsi réalisé permet la mise en place d'objets quasi-sphériques tels que griottes, noisettes, pralines ou articles similaires sur des produits récepteurs tels que pâtisseries, entremets, crèmes glacées en vue de leur ornementation et de leur agrémentation, et cela, de manière régulière, sûre et, comme le montre l'experience, particulièrement fiable par rapport aux appareils déjà connus et notamment sans risque d'introduction de corps étrangers dangereux, et d'autant plus dangereux qu'ils peuvent passer inaperçus, à l'intérieur de produits alimentaires.

On a décrit, ci-dessus, un appareil muni de vérins à fluide sous pression, qu'il s'agisse d'air comprimé ou d'un liquide sous pression, mais il est claire que tout autre type de vérin qu'il soit, par exemple, purement mécanique ou électromagnétique et produisant les mêmes effets peut être utilisé pour la production des mouvements de rotation alternatifs de la trémie et du tube récepteur des produits quasi-sphériques et du mouvement de translation alternatif de la tige d'éjection nécessaires au fonctionnement dudit appareil.

Par ailleurs, l'extrémité de la tige 7 peut être de toute forme; plane, convexe ou concave. Dans ce dernier cas, son bord peut être tranchant et permettre d'emboutir des objets mous, tels que par exemple, des pruneaux à l'Armagnac.

## Revendications

1. Appareil de distribution et de mise en place d'objets quasi-sphériques sur un support, comportant une trémie (1) de réception desdits objets quasi-sphériques, pouvant coopérer avec un organe lui imprimant un mouvement oscillatoire, et munie d'un orifice inférieur d'évacuation des produits hors de ladite trémie (1) caractérisé par le fait qu'il comprend un canal cylindrique (3) de réception desdits objets placé sur le support (2) de ladite trémie (1) et muni d'un orifice calibré (5) disposé immédiatement en dessous et en regard de l'orifice d'évacuation de la trémie (1), lequel canal (3) est mobile en rotation autour de son axe longitudinal entre deux positions extrêmes symétriques l'une de l'autre par rapport à une position moyenne ainsi qu'une tige cylindrique (7) coulissant axialement suivant un mouvement alternatif à l'intérieur du canal cylindrique (3), l'ensemble des mouvements permettant à l'orifice calibré (5) de balayer tout le champ du fond de la trémie (1), l'orifice calibré (5) se trouvant découvert dans une position extrême de la tige cylindrique (7) et obturé dans son autre position extrême, son extrémité libre dépassant alors hors de l'extrémité du canal (3), en chassant ainsi l'objet hors du canal (3).

2. Appareil de distribution selon la revendication 1, caractérisé par le fait que l'organe imprimant à la trémie (1) un mouvement oscillatoire est un organe provoquant un mouvement de rotation alternative de celle-ci entre deux positions extrêmes symétriques l'une de l'autre par rapport à une position moyenne, autour d'un axe fixe par rapport à ladite trémie (1) et parallèle à l'axe longitudinal du canal (3) de réception des objets.

3. Appareil de distribution selon la revendication 1, caractérisé par le fait qu'au mouvement de rotation alternatif de la trémie (1) est associé un mouvement de rotation du canal cylindrique (3) muni de l'orifice calibré (5) de sens contraire et qu'à cet effet ledit canal (3) est muni d'un bras radial (15) dont l'extrémité est articulée en pivotement au moyen d'un·pivot à rotule (16) sur l'extrémité de la tige (17) d'un vérin dont le corps (18) est relié solidairement à l'une des faces longitudinales de la trémie par l'intermédiaire de deux bras (19, 23) solidaires l'un (23) de la trémie, l'autre (19) du corps de vérin et articulés entre eux en pivotement au. moyen d'un pivot à rotule (22) disposé aux extrémités de ces deux bras (19, 23) entre la trémie (1) et la tête du corps de vérin (18).

4. Appareil de distribution selon l'une quelconque des revendications 1, 2 ou 3, caractérisé par le fait que l'extrémité de la tige (7) mobile en translation axiale à l'intérieur du canal (3) d'évacuation des produits opposée à son extrémité libre, est solidaire de l'extrémité (8a) de la tige d'un vérin (8b) d'axe parallèle à l'axe longitudinal du canal (3) et dont le corps est solidaire du support dudit canal (3).

5. Appareil de distribution selon l'une quelconque des revendications 1, 2, 3 ou 4, caractérisé par le fait que le canal (3) d'évacuation est muni d'au moins un manchon (6) déplaçable en translation axiale et/ou en rotation autour de l'axe longitudinal dudit canal (3), ledit manchon (6) permettant le réglage de la longueur et/ou de la largeur de l'orifice calibré (5).

## Patentansprüche

1. Vorrichtung zur Verteilung und zum Ablegen von quasi-sphärischen Gegenständen auf einen Träger und die einen Aufnahmetrichter (1) für die quasi-sphärischen Gegenstände aufweist, dem durch eine Einrichtung eine Hin und Herbe-wegung erteilt werden kann und der mit einer unteren Öffnung für die Abgabe der Gegenstände aus dem Trichter (1) ausgerüstet ist, gekennzeichnet durch ein zylindrisches Rohr (3) für die Aufnahme der Gegenstände, das auf dem Träger (2) des Trichters (1) angeordnet und mit einer unmittelbar unter der Abgabeöffnung des Trichters (1) befindlichen und damit ausgerichteten kalibrierten Öffnung (5) versehen ist, wobei das Rohr (3) um seine Längsachse zwischen zwei Endstellungen drehbar ist, welche in bezug auf eine Mittelstellung symmetrisch sind, und durch einen zylindrischen Stab (7), der im Inneren des zylindrischen Rohrs (3) axial hin- und herbewegbar ist, wobei die Bewegungen es insgesamt ermöglichen, daß die kalibrierte Öffnung (5) das ganze Feld des Bodens des Trichters (1) bestreicht und wobei die kalibrierte Öffnung (5) in einer Endstellung des zylindrischen Stabs (7) offen und in der anderen Endstellung verschlossen ist, wobei sein freies Ende über das Ende des Rohrs hinausgeht und dabie einen Gegenstand aus dem Rohr (3) auswirft.

2. Verteilungsvorrichtung nach Anspruch 1, dadurch gekennzeichnet, daß die Einrichtung, welche dem Aufnahmetrichter (1) eine Hin- und Herbewegung erteilt, eine Einrichtung ist, welche ihm eine hin- und hergehende Drehbewegung zwischen zwei zu einer Mittelstellung symmetrischen Endstellungen erteilt, und zwar um eine in bezug auf den Trichter (1) festliegende und parallel zur Längsachse des Rohrs (3) für die Aufnahme der Gegenstände verlaufende Achse.

3. Verteilungsvorrichtung nach Anspruch 1, dadurch gekennzeichnet, daß mit der hin- und hergehenden Drehbewegung des Trichters (1) eine Drehbewegung des zylindrischen Rohrs (3), das die kalibrierte Öffnung (5) aufweist, eine Drehbewegung im Gegensinn verknüpft ist und daß hierzu das Rohr (3) mit einem radialen Arm (15) ausgerüstet ist, dessen Ende mit Hilfe eines Kugelgelenks (16) am Ende der Kolbenstange (17) einer Kolben/Zylinder-Einheit angelenkt ist, deren Zylinder (18) fest mit einer der Längsflächen des Trichters verbunden ist, und zwar zwei Arme (19, 23), von denen der eine (23) am Trichter und der andere (19) am Zylinder der Kolben/Zylinder-Einheit befestigt ist und die über ein Kugelgelenk (22), das an den Enden der beiden Arme (19, 23) angebracht ist, den Trichter (1) und das Ende des Zylinders (18) der Kolben/Zylinder-Einheit gelenkig verbinden.

4. Verteilungsvorrichtung nach einem der Ansprüche 1, 2 oder 3, dadurch gekennzeichnet, daß das Ende des axial im Innern des Rohrs (3) zwecks Abgabe der Gegenstände längsbeweglichen Stabs (7), das seinem freien Ende gegenüberliegt, mit dem Ende (8a) der Kolbenstange einer Kolben/Zylinder-Einheit (8b) verbunden ist, deren Achse parallel zur Längsachse des Rohrs (3) verläuft und deren Zylinder am Träger des Rohrs (3) befestigt ist.

5. Verteilungsvorrichtung nach einem der Ansprüche 1, 2, 3 oder 4, dadurch gekennzeichnet, daß das Abgaberohr (3) mit mindestens einer Manschette (6) versehen ist, die in axialer Richtung verschiebbar und/oder um die Längsachse des Rohrs (3) dreh-bar ist, wobei die Manschette (6) eine Einstellung der Länge und/oder der Breite der kalibrierten Öffnung (5) gestattet.

**Claims**

1. An apparatus for distributing and placing quasi-spherical objects on a support comprising a hopper (1) for receiving said quasi-spherical objects which is adapted to cooperate with an element imparting an oscillating movement thereto and provided with a lower opening through which the objects are removed from the hopper (1), characterised in that it comprises a cylindrical tube (3) for receiving said objects which is placed on a framing (2) of said hopper (1) and which is provided with a calibrated opening (5) which is situated immediately underneath and opposite the lower opening of said hopper (1), said cylindrical tube (3) being rotatable about its longitudinal axis between two end positions symmetrical to one another in relation to mean position and a cylindrical rod (7) sliding axially in an alternating movement inside the cylindrical tube (3), the movements together enabling the calibrated opening (5) to sweep over the entire base area of the hopper (1), the calibrated opening being uncovered in one end position of the cylindrical rod (7) and covered in its other end position so that its free end projects beyond the end of the tube (3), thus ejecting the object from the tube (3).

2. An apparatus as claimed in claim 1, characterised in that the element imparting an oscillating movement to the hopper (1) is an element which produces an alternating rotational movement of the hopper between two end positions symmetrical to one another in relation to a mean position about an axis which is fixed relative to said hopper (1) and parallel to the longitudinal axis of the tube (3) receiving the objects.

3. An apparatus as claimed in claim 1, characterised in that an oppositely directed rotational movement of the cylindrical tube (3) provided with the calibrated opening (5) is associated with the alternating rotational movement of the hopper (1) and, to this end, said tube (3) is provided with a radial arm (15) of which the end is pivotally connected by means of a ball pivot (16) to the end of the rod (17) of a jack of which the body (18) is fixedly connected to one of the longitudinal faces of the hopper through two arms (19, 23) of which one (23) is fixed to the hopper and the other (19) to the jack body and which are pivotally interconnected by means of a ball pivot (22) arranged at the ends of these two arms (19, 23) between the hopper (1) and the head of the jack body (18).

4. An apparatus as claimed in any of claims 1, 2 or 3, characterised in that the end of the rod (7) mounted for axial displacement in the discharge tube (3) for the products opposite its free end is fixed to the end (8a) of the rod of a jack (8b) of which the axis is parallel to the longitudinal axis of the tube (3) and of which the body is fixed to the support of said tube (3).

5. An apparatus as claimed in any of claims 1, 2, 3 or 4, characterised in that the discharge tube (3) is provided with at least one sleeve (6) adapted for axial displacement and/or rotation about the longitudinal axis of said tube (3), said sleeve (6) enabling the length and/or width of the calibrated opening (5) to be adjusted.

FIG.1a

FIG.1b

FIG.2

FIG.4

0013442

FIG.3